## Europäisches Patentamt
## European Patent Office
## Office européen des brevets

(19)

(11) Veröffentlichungsnummer: **0 239 795**
**B1**

(12)

# EUROPÄISCHE PATENTSCHRIFT

(45) Veröffentlichungstag der Patentschrift:
06.12.89

(51) Int. Cl.⁴: **B65G 47/14**

(21) Anmeldenummer: 87102773.6

(22) Anmeldetag: 26.02.87

(54) Vorrichtung zum Vereinzeln von Wirrteilen, insbesondere Schraubenfedern.

(30) Priorität: 29.03.86 DE 3610778

(43) Veröffentlichungstag der Anmeldung:
07.10.87 Patentblatt 87/41

(45) Bekanntmachung des Hinweises auf die Patenterteilung:
06.12.89 Patentblatt 89/49

(84) Benannte Vertragsstaaten:
AT CH DE FR GB IT LI

(56) Entgegenhaltungen:
DD-A- 29 630
DE-C- 219 909
US-A- 4 220 257

PATENT ABSTRACTS OF JAPAN, Band 7,
Nr. 41 (M-194)[1186], 18. Februar 1983

(73) Patentinhaber: ROBERT BOSCH GMBH, Postfach 50,
D-7000 Stuttgart 1(DE)

(72) Erfinder: Peter, Heinz, Reckenberg 22,
D-8973 Hindelang(DE)
Erfinder: Fracaro, Peter, Mühlenstrasse 5,
D-8978 Burgberg/Allgäu(DE)

ACTORUM AG

## Beschreibung

### Stand der Technik

Die Erfindung geht aus von einer Vorrichtung zum Vereinzeln von Wirrteilen, insbesondere Schraubenfedern, nach der Gattung des Hauptanspruchs. Bei bekannten Vorrichtungen dieser Gattung (US-A-4 220 257) fallen die Wirrteile vom Ausgang der Förderstrecke über eine gewisse Höhe frei auf den äußeren bzw. inneren Ringbereich des rotierenden Auflageteils, welches als eine bis nahe an die Wand heranreichende Scheibe mit nach oben abstehenden Leisten ausgebildet ist. Bei diesen Vorrichtungen sollen die Wirrteile durch den Aufprall auf das Auflageteil sowie durch den Schlag, den sie durch die umlaufenden Leisten erhalten, voneinander getrennt und vereinzelt werden. Diese Vorrichtungen arbeiten jedoch nicht in allen Fällen zufriedenstellend, insbesondere wenn es sich um Schraubenfedern handelt, deren Windungszwischenräume geringfügig kleiner als deren Drahtdurchmesser sind und die demzufolge auch durch höhere Klemmkräfte zusammengehalten sein können.

Ferner ist in der DD-PS-29 630 schon vorgeschlagen worden, den zu entwirrenden Schraubenfederbündeln eine kinetische Energie zu verleihen, beispielsweise mittels einer mit Hilfe eines rotierenden Tellers oder einer Schleuder erzeugten Fliehkraft.

### Vorteile der Erfindung

Die erfindungsgemäße Anordnung mit den kennzeichnenden Merkmalen des Hauptanspruchs hat demgegenüber den Vorteil, daß auf die verhängten Wirrteile erheblich größere Trennkräfte als bei den bekannten Ausführungen ausgeübt werden, so daß auch stark verklemmte Schraubenfedern sicher vereinzelt werden und daß durch die nach unten offene Ringöffnung die entwirrten Teile sofort und ohne unnötigen Aufenthalt den Entwirrer verlassen können.

Durch die in den Unteransprüchen aufgeführten Merkmale sind vorteilhafte Weiterbildungen der Anordnung nach dem Hauptanspruch möglich. Eine spezielle Formgebung der Förderstrecke ermöglicht die Ausbildung eines Speicherraumes, der die Wirrteile kontrolliert auf das Auflageteil führt. Weiterhin eignet sich die erfindungsgemäße Vorrichtung besonders für den Einbau in den zentralen Bereich eines Schwingförderers, wobei die entwirrten Teile aus der Vorrichtung einfach nach unten herausfallen und über den Boden des Schwingförderers wieder in dessen Wendelbahn gelangen.

### Zeichnung

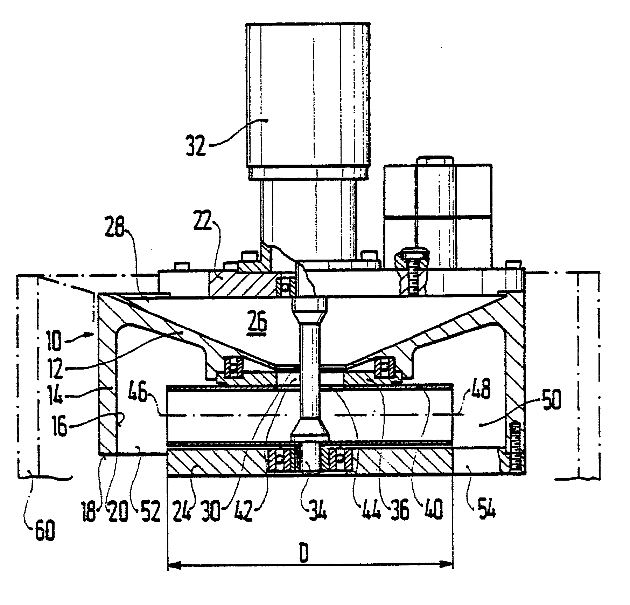

Ein Ausführungsbeispiel der Erfindung ist in der Zeichnung dargestellt und in der nachfolgenden Beschreibung näher erläutert. Die einzige Figur zeigt einen Längsschnitt durch das Ausführungsbeispiel.

### Beschreibung des Ausführungsbeispiels

Die Vorrichtung hat als tragendes Teil einen topfförmigen, nach unten offenen Gehäusekörper 10, dessen Boden 12 zur Mitte hin konisch nach unten geformt ist. An den Boden 12 schließt sich ein zylindrischer Mantel 14 an, der eine glatte Innenwand 16 hat, welche mit der Stirnfläche 18 des Mantels eine Ringkante 20 bildet. Am Gehäusekörper 10 ist oben eine Konsole 22 und unten an die Stirnfläche 18 eine Konsole 24 angeschraubt. Zwischen der oberen Konsole 22 und dem Boden 12 ist ein kegelförmiger Speicherraum 26 gebildet, der oben mit einer Eingangsöffnung 28 und unten mit einer zentralen Ausgangsöffnung 30 versehen ist.

Auf der Konsole 22 ist ein elektrischer Antriebsmotor 32 befestigt, dessen durch die Ausgangsöffnung 30 hindurchtretende Abtriebswelle 34 in den Konsolen 22 und 24 drehbar gelagert ist. An der Unterseite des Bodens 12 ist konzentrisch zur Abtriebswelle 34 eine Flanschplatte 36 drehbar gelagert, an der ein Rohr 40 im rechten Winkel zur senkrechten Abtriebswelle 34 befestigt ist. Die Flanschplatte 36 ist mit einer zentralen Durchgangsöffnung 42 versehen, die mit der Ausgangsöffnung 30 des Bodens 12 und einer Wandbohrung 44 in dem Rohr 40 korrespondiert. Gegenüber der Wandbohrung 44 ist das Rohr 40 fest mit der Abtriebswelle 34 verbunden.

Das Rohr 40 wird bei laufendem Antriebsmotor 32 um die Achse der Abtriebswelle 34 gedreht, wobei die beiden Achsenden 46, 48 des Rohres 40 eine Kreisbahn mit dem Durchmesser D beschreiben. Zwischen dem durch die Kreisbahn vom Durchmesser D begrenzten Bewegungsbereich des rotierenden Rohres 40 und der Innenwand 16 des Mantels 14 ist ein Ringraum 50 gebildet, der eine nach unten gerichtete Ringöffnung 52 hat, welche nur an einer Stelle durch die Konsole 24 unterbrochen ist. Diese ist im Bereich der Ringöffnung 52 als verhältnismäßig schmaler Steg 54 ausgebildet, der in Umfangsrichtung gesehen zweckmäßig ein pfeilförmiges Profil mit zwei schräg nach unten abfallenden Kopfflächen hat.

Im Betrieb der Vorrichtung werden die durch die Eingangsöffnung 28 zugeführten Wirrteile auf dem schrägen Boden 12 des Gehäusekörpers 10 zu dessen zentraler Öffnung 30 geführt, von wo sie in das Innere des Rohres 40 fallen. Im rotierenden Rohr 40 werden die Wirrteile durch die Zentrifugalkraft nach außen gegen die Innenwand 16 des Mantels 14 geschleudert, von wo sie nach unten fallen und durch die Ringöffnung 52 aus der Vorrichtung herausgelangen. Die Drehzahl des Rohres 40 ist so gewählt, daß die Wucht des Aufpralls der Wirrteile am Mantel 14 den gewünschten Entwirrungseffekt auch bei verklemmten Wirrteilen hervorruft.

Der Gehäusekörper 10 kann vorteilhaft mit Mitteln zum Befestigen im Zentralbereich eines durch strichpunktierte Linien angedeutet Schwingfördertopfes 60 versehen sein. Bei einer solchen Anordnung der Entwirrvorrichtung kann am Ausgang des Schwingfördertopfes eine Schikane vorgesehen sein, die nur miteinander verhakte oder verklemmte Wirrteile aussondert und in die Eingangsöffnung 28 der Vorrichtung lenkt. Die am Mantel 14 der Vorrichtung vereinzelten Wirrteile fallen bei dieser Anordnung durch die Ringöffnung 52 auf den Boden des Schwingfördertopfes 60, von wo sie erneut in dessen Wendelbahn gelangen.

**Patentansprüche**

1. Vorrichtung zum Vereinzeln von Wirrteilen, insbesondere Schraubenfedern, mit einer vorzugsweise als Zwischenspeicher ausgebildeten Förderstrecke (12), aus der die Wirrteile gezielt auf den mittleren Bereich eines, um eine senkrechte Achse rotierenden, Auflageteils (40) gelangen, welches die Wirrteile an eine den Bewegungsbereich des Auflageteils umgebende Wand (14, 16) führt, von der die Wirrteile in einen Auslaß (52) gelangen, dadurch gekennzeichnet, daß das Auflageteil (40) so gestaltet und seine Drehzahl so gewählt ist, daß die Wirrteile unter dem Einfluß der Zentrifugalkraft mit einer den angestrebten Entwirrungseffekt hervorrufenden Wucht auf die den Bewegungsbereich des Auflageteils (40) mit Abstand umgebende Wand (14, 16) auftreffen, und daß zwischen dem Bewegungsbereich des Auflageteils (40) und der umgebenden Wand (16) ein Ringraum (50) gebildet ist, aus welchem der Auslaß (52) nach unten herausführt.

2. Vorrichtung nach Anspruch 1, dadurch gekennzeichnet, daß die Auflagefläche des Auflageteils (40) mit mindestens annähernd radial zur Rotationsachse ausgerichteten Erhebungen versehen ist.

3. Vorrichtung nach Anspruch 2, dadurch gekennzeichnet, daß das Auflageteil (40) als ein senkrecht zu seiner Rotationsachse angeordnetes Rohr ausgebildet ist, welches mit einer der Ausgangsöffnung (30) der Förderstrecke (12) gegenüberliegenden Wandöffnung (44, 42) versehen ist.

4. Vorrichtung nach Anspruch 1, gekennzeichnet durch einen topfförmigen, nach unten offenen Gehäusekörper (10), an dessen Mantel (14) die den Bewegungsbereich des rotierenden Auflageteils (40) mit Abstand umgebende Wand (16) gebildet ist.

5. Vorrichtung nach Anspruch 4, dadurch gekennzeichnet, daß der Boden (12) des Gehäusekörpers (10) zur Mitte hin konisch nach unten geformt ist und eine zum rotierenden Auflageteil (40) führende, einen Speicherraum (26) nach unten begrenzende Förderstrecke bildet.

6. Vorrichtung nach einem der vorhergehenden Ansprüche, dadurch gekennzeichnet, daß sie mit Mitteln zum integrierten Einbau in einen Schwingfördertopf versehen ist.

**Revendications**

1. Dispositif de séparation de pièces emmêlées, notamment de ressorts hélicoïdaux, avec un parcours de transport (12) constitué, de préférence, comme un accumulateur intermédiaire, à partir duquel les pièces emmêlées gagnent, selon la destination prévue, la zone centrale d'une partie d'appui (40) tournant autour d'un axe vertical, laquelle dirige les pièces emmêlées contre une paroi (14—16) entourant la zone de déplacement de la partie d'appui, de laquelle les pièces emmêlées gagnent une sortie (52), caractérisé en ce que la partie d'appui (40) est conformée et sa vitesse de rotation est choisie de manière telle que les pièces emmêlées viennent heurter, sous l'effet de la force centrifuge, la paroi (14, 16) entourant à une certaine distance la zone de déplacement de la partie d'appui (40) avec une énergie cinétique proccurant l'effet de démêlage recherché et en ce qu'il est constitué entre la zone de déplacement de la partie d'appui (40) et la paroi d'entourage (16) un intervalle annulaire (50) ouvrant une sortie (52) qui dirige les pièces vers l'extérieur par le bas.

2. Dispositif selon la revendication 1, caractérisé en ce que la surface d'appui de la partie d'appui (40) est pourvue d'élévations alignées au moins de manière approximativement radiale par rapport à l'axe de rotation.

3. Dispositif selon la revendication 2, caractérisé en ce que la partie d'appui (40) est constituée par un tube disposé perpendiculairement à son axe de rotation, qui est pourvu d'une ouverture de paroi (44, 42) disposée en regard de l'orifice de sortie (30) au parcours de transport (12).

4. Dispositif selon la revendication 1, caractérisé par un corps (10) ouvert vers le bas, en forme de pot, sur l'enveloppe (14) duquel est constituée la paroi (16) entourant à une certaine distance la zone de déplacement de la partie d'appui (40) tournante.

5. Dispositif selon la revendication 4, caractérisé en ce que la base (13) du corps (10) s'étend en forme de cône vers le bas et vers le milieu et constitue un parcours de transport conduisant vers la partie d'appui (40) tournante et délimitante vers le bas un emplacement d'accumulation.

6. Dispositif selon l'une des revendications qui précèdent, caractérisé en ce qu'il est pourvu de moyens de montage intégré dans un pot de transport à mouvements oscillatoires.

**Claims**

1. Device for separating tangled objects, especially coiled springs, having a conveyor path (12), preferably constructed as an intermediate store, out of which the tangled objects pass purposefully onto the central region of a supporting part (40) rotating about a vertical axis which guides the tangled objects onto a wall (14, 16) enclosing the region of movement of the supporting part, from where the tangled objects pass into an outlet (52), characterized in that the supporting part (40) is conformed and its speed is chosen so that the tangled objects under the influence of the centrifugal force strike the wall (14, 16) surrounding the region of movement of the supporting part (40) at an interval with an impetus which generates the required disentangling effect, and that an annular space (50), from which the outlet (52) leads out downwards, is formed between the region of movement of the supporting part (40) and the enclosing wall (16).

2. Device according to Claim 1, characterized in that the supporting part (40) is constructed as a tube arranged at right angles to its axis of rotation which is provided with a wall aperture (44, 42) opposite the outlet aperture (30) of the conveyor path (12).

4. Device according to Claim 1, Characterized by a pot-shaped housing element (10) open downwards, on the jacket (14) of which the wall (16) which encloses the region of movement of the rotating supporting part (40) with an interval is formed.

5. Device according to Calim 4, characterized in that the base (12) of the housing element (10) is formed conically downwards towards the centre and forms a conveyor path leading towards the rotating supporting part (40) and delimiting a storage space (26) downwards.

6. Device according to one of the preceding claims, characterized in that it is provided with means for integrated installation into a vibrating conveyor pot.